# EUROPEAN PATENT APPLICATION

(11) **EP 1 860 254 A1**
(43) Date of publication of application: **28.11.2007**
(21) Application number: 07010415.3
(22) Date of filing: 25.05.2007
(51) Int. Cl.: E04F 13/08, E04F 15/02, G21F 1/06, G21F 1/12

(54) **Product for covering surfaces, particularly walls of X-ray rooms, dental surgeries or the like**

(30) Priority: 26.05.2006 IT MO20060167
(71) Applicant: T.W.R. SAS DI MARIO DODA & C., 41056 Savignano sul Panaro MO (IT)
(72) Inventor: Doda, Mario, 41051 Montale di Castelnuovo Rangone (MO) (IT)
(74) Representative: Brogi, Graziano

(57) **Abstract**

The product for covering surfaces, particularly walls of radiological rooms, dental surgeries or the like, comprises a substantially plate-shaped element having an installation surface and a visible surface, and a multilayer covering having at least one first layer of anchoring material associated with at least one of either the installation surface and the visible surface, and at least a second layer of radioprotective material associated with the first layer.

## Description

The present invention refers to a product for covering surfaces, particularly walls of radiological rooms, dental surgeries or the like.

As is known, in the radiological rooms of hospitals, dental surgeries and/or particular scientific laboratories, appliances are installed that permit taking so-called "radiographic" photos, by means of the emission of particular ionising radiations (X-rays, γ-rays, etc.) which, bordering on ultra-violet radiations, comprise the wavelength interval that goes approximately from 0.1·10⁻¹⁰ m up to 5·10⁻¹⁰ m (X-rays) and even shorter γ-rays, comprised within the interval between approximately 0.001·10⁻¹⁰ m up to 0.1·10⁻¹⁰ m.

Radiography applications concern, on the one hand, medical-diagnostic exam procedures that permit determining pathological alterations of the bones and organs of human beings and, on the other hand, the so-called "non-destructive controls" that permit examining the quality attributes of samples and/or objects without destroying or damaging them.

The use of such technology is based on the fact that radiations with very short wavelengths cross the bodies to an extent depending on their characteristics and that, because of the partial absorption of radiations due to the different natures of bodies, to the lack of uniformity and to the presence of foreign substances, images with differentiated densities form on the radiography film that make it possible to draw the necessary conclusions.

Although occasional exposure to the above ionising radiations is not particularly harmful for the human body, it has been proved, on the other hand, that persons exposed to these radiations for long periods of time have suffered serious damage to their health.

In this respect, therefore, premises used to accommodate radiographic technologies must be protected by means of specific systems that prevent the propagation of the electromagnetic waves outside, so as to safeguard things and/or people near such premises.

Such systems currently consist in fitting lead panels inside the perimeter walls, in floors, in ceilings and in the door and window frames of such premises.

These panels are fitted at the time of building of radiological rooms/dental surgeries/scientific laboratories and are replaced when worn because of the deterioration of the lead due to a form of corrosion of the material commonly called "lead worm".

These known systems are not however without drawbacks, including the fact that they have very high production, installation and disposal costs.

In order in fact for such systems to provide good radioprotective capacities, the thickness of the lead panels must be fairly large; besides the problems tied to the fairly heavy cost of the raw material therefore, the use of such panels implies considerable installation difficulties due to their heavy weight.

It is furthermore necessary to underline the numerous problems of an environmental and health nature that arise at the time of removing the worn panels, when it is necessary to put into place a complicated health protocol involving the implementation of various safety procedures to avoid accidents including the encapsulation of the removed material inside special sealed boxes to be used for subsequent transport and storage.

Nor should it be forgotten either that the subsequent final disposal phase of the worn lead is no less problematic than the previous ones, considering the objective difficulty in finding professional companies that deal with the treatment of this material.

The main aim of the present invention is to eliminate the drawbacks of prior art complained of above and provide a product for covering surfaces, particularly walls of radiological rooms, dental surgeries or the like, that allows protecting the premises inside which are installed appliances for the emission of ionising radiations, acting as an obstacle to the passage of the radiations themselves and, at the same time, being easy to make and store and quick to install.

Another object of the present invention is not to suffer wear as a result of exposure to the ionising radiations and not therefore to need periodical replacement.

Another, no less important object of the present invention is that of being easily removed and disposed of in a refuse dump, without causing serious problems of an environmental and/or health nature.

A further object of the present invention is to be particularly appealing from an economic viewpoint, with much lower production, installation and removal costs than those of traditional systems.

This aim and these objects are all achieved by this product for covering surfaces, particularly walls of radiological rooms, dental surgeries or the like, comprising at least one substantially plate-shaped element having at least one installation surface and at least one visible surface, characterized in that it comprises at least one multilayer covering having at least one first layer of anchoring material associated with at least one of either said installation surface and said visible surface, and at least a second layer of radioprotective material associated with said first layer.

Further characteristics and advantages of the present invention will appear even more evident from the detailed description of a preferred, but not exclusive, embodiment of a product for covering surfaces, particularly walls of radiological rooms, dental surgeries or the like illustrated indicatively by way of non limiting example, in the attached drawings wherein:
the figure 1 is an axonometric view of the product according to the invention;
the figure 2 is a side view, in enlarged scale, of a part of the product according to the invention;
the figure 3 is an axonometric, schematic and partial view of an environment, the walls, floor and ceiling of which are covered with the products according to the invention.

With special reference to such figures, a product for covering surfaces, particularly walls of radiological rooms, dental surgeries or the like has been globally designated by reference number 1.

The product 1 comprises a plate-shaped element 2, having an installation surface 3 and a visible surface 4, meaning by installation surface 3 the face of the product 1 facing the wall, floor or ceiling once installed, and by visible surface 4 the face opposite the installation surface.

Usefully, this element is made up of a slab made of fired ceramic material.

Furthermore, the product I comprises a multilayer covering 5 made up of a first layer 6 of anchoring material associated with at least one of either the installation surface 3 and the visible surface 4 of the element 2, and of a second layer 7 of radioprotective material associated with the first layer 6, by radioprotective material being meant a composition able to prevent crossing by electromagnetic radiations which comprise the wave length interval that substantially varies between 0.001·10⁻¹⁰ m and 0.1·10⁻¹⁰ m (γ rays) and between 0.1·10⁻¹⁰ m and 5·10⁻¹⁰ m (X rays).

In the particular embodiment of the invention shown in the illustrations, the multilayer covering 5 is applied on the visible surface 4 of the product 1, but other embodiments cannot be ruled out in which, on the contrary, this is applied on the installation surface 3, or else covers both the surfaces 3 and 4.

Advantageously, the first layer 6 extends over the total visible surface 4 and, in the same way, the second layer 7 extends over the total of the first layer 6, so the exposure of the product 1 to X-ray and/or γ-ray emissions does not allow this to be transversally crossed at any point.

In the particular embodiment of the invention shown in the illustrations, the multilayer covering 5 is made up only of the first and the second layers 6 and 7; it cannot be ruled out however that a third covering layer be provided of at least a portion of the second layer 7 of the type of a film in polymer material with a decorative and/or protective purpose, or one or more auxiliary layers in different materials that can be placed in between the first and the second layers 6 and 7.

The element 2 in ceramic material is made using the conventional pressing, injection moulding, extrusion or drawing methods with subsequent firing of a generic ceramic mix, preferably of the frost-proof type.

The procedure according to the invention, used to make the product 1 described above, comprises a first preliminary cleaning phase of the visible surface 4 of the element 2, by means of surface abrasion of the mechanical type, for example by sandblasting, suitable for obtaining a surface with a controlled roughness substantially between the values Ra = 2.5 and Ra = 6.5.

On the visible surface 4 thus polished, the first layer 6 is afterwards applied; advantageously, this operation is performed by plasma spray heat spraying, HVOF (High Velocity Oxygen Fuel), or flame spray, which permits the melting of the particles of the anchoring material and their projection towards the visible surface, where they rapidly solidify producing superimposed laminar structures, forming the first layer 6.

The second layer 7 can also be applied in the same way, meaning by heat spraying on the first layer 6 particles of the radioprotective material in melted or semi-melted state which, once solidified, will make up the second layer 7.

Practically speaking, the first layer 6 fixes the powders of the second layer 7 and acts as a cushion to absorb the heat and mechanical stresses generated during the heat spraying of the second layer 7.

The composition of the second layer 7, on the other hand, is specifically formulated to represent a film resistant to the crossing of the electromagnetic radiations.

In detail, the first layer 6 is made up of a mix that comprises Nickel (Ni) and Chrome (Cr) in the following weight concentrations evaluated with respect to the total weight of the first layer 6:

| | |
|---|---|
| Ni | 60-100 % |
| Cr | 0-40% |

The second layer 7, on the other hand, comprises tungsten carbide (WC) and cobalt (Co), chrome (Cr), nickel (Ni) and carbon (C) joined together in the following weight concentrations evaluated with respect to the total weight of the second layer 7:

| | |
|---|---|
| WC | 40-100% |
| Co | 0-20% |
| Cr | 0-25% |
| Ni | 0-40% |
| C | 0-6% |

In addition or instead of cobalt (Co), chrome (Cr), nickel (Ni) and carbon (C), the second layer 7 could comprise copper (Cu) and aluminium (Al).

The ceramic product 1 thus obtained can be used for the radioactive insulation of all those premises in which wide use is made of electromagnetic radiations such as X-rays and γ-rays like, for example, hospital radiology rooms, dental surgeries, scientific laboratories where non-destructive controls are performed on material, or the like.

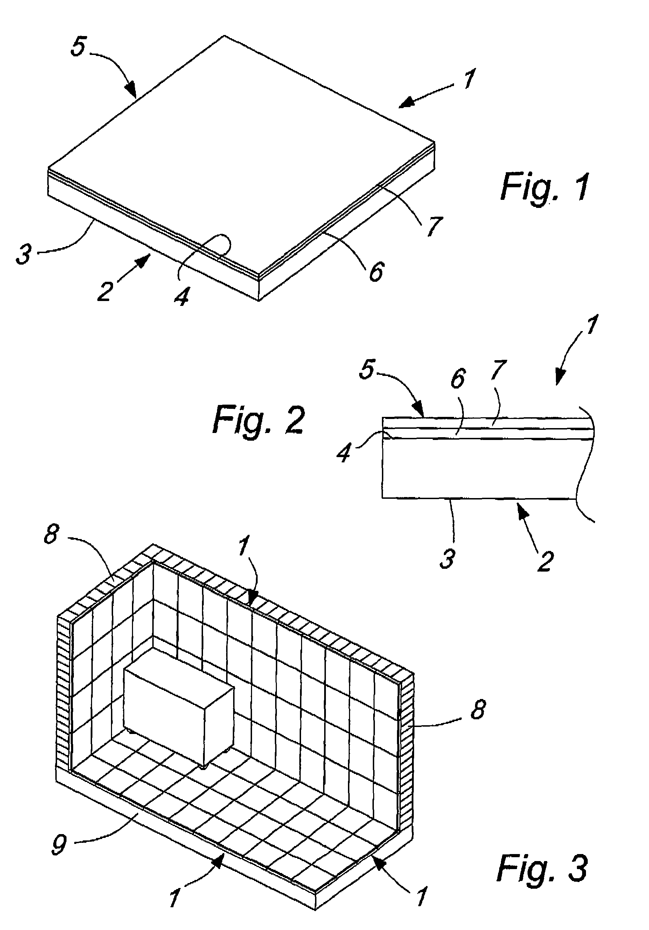

As shown in figure 3, the products 1 described above can be used to completely cover the walls 8, the floor 9 and the ceiling of the above-mentioned premises, by arranging the products 1 alongside one another with continuity and without leaving any joints in between, so as to form a continuous radioprotective shield that prevents the radiations escaping.

It has in fact been ascertained how the described invention achieves the proposed objects.

The invention thus conceived is susceptible of numerous modifications and variations, all of which falling within the scope of the inventive concept.

Furthermore all the details may be replaced by other elements which are technically equivalent.

In practice, the contingent shapes and dimensions may be any according to requirements without because of this moving outside the protection scope of the following claims.

## Claims

1. Product for covering surfaces, particularly walls of radiological rooms, dental surgeries or the like, comprising at least one substantially plate-shaped element having at least one installation surface and at least one visible surface, **characterized in that** it comprises at least one multilayer covering having at least one first layer of anchoring material associated with at least one of either said installation surface and said visible surface, and at least a second layer of radioprotective material associated with said first layer.

2. Product according to claim 1, **characterized in that** said element is made up of substantially ceramic material.

3. Product according to one or more of the preceding claims, **characterized in that** said element is a fired ceramic slab.

4. Product according to one or more of the preceding claims, **characterized in that** said first layer extends over the total of at least one between said installation surface and said visible surface.

5. Product according to one or more of the preceding claims, **characterized in that** said second layer extends over the total of said first layer.

6. Product according to one or more of the preceding claims, **characterized in that** said first layer comprises Nickel (Ni) and Chrome (Cr) in the following weight concentrations evaluated with respect to the total weight of the first layer:
| | |
|---|---|
| Ni | 60-100% |
| Cr | 0-40% |

7. Product according to one or more of the preceding claims, **characterized in that** said second layer comprises tungsten carbide (WC).

8. Product according to one or more of the preceding claims, **characterized in that** said second layer comprises at least one additional component selected from the group comprising cobalt (Co), chrome (Cr), nickel (Ni), carbon (C), copper (Cu) and aluminium (Al).

9. Product according to one or more of the preceding claims, **characterized in that** said second layer comprises tungsten carbide (WC), cobalt (Co), chrome (Cr), nickel (Ni) and carbon (C) in the Following weight concentrations evaluated with respect to the total weight of the second layer:
| | |
|---|---|
| WC | 40-100% |
| Co | 0-20% |
| Cr | 0-25% |
| Ni | 0-40% |
| C | 0-6% |

10. Product according to one or more of the preceding claims, **characterized in that** said multilayer covering comprises a third covering layer of at least a portion of said second layer.

11. Procedure for making the product according to one or more of the claims from 1 to 10, **characterized in that** it comprises the steps which consist in:
- providing a substantially plate-shaped element having at least one installation surface and at least one visible surface;
- projecting particles of an anchoring material in melted or semi-melted state onto at least one between said installation surface and said visible surface to make up said first layer; and
- projecting particles of a radioprotective material in melted or semi-melted state onto said first layer to make up said second layer.

12. Procedure according to claim 11, **characterized in that** at least one between said projecting particles of an anchoring material and said projecting particles of a radioprotective material comprises heat spraying.

13. Procedure according to at least one of the claims 11 and 12, **characterized in that** said heat spraying is of the plasma spray and/or HVOF and/or flame spray type.

14. Procedure according to one or more of the claims from 11 to 13, **characterized in that** said first layer comprises Nickel (Ni) and Chrome (Cr) in the following weight concentrations evaluated with respect to the total weight of the first laver:
| | |
|---|---|
| Ni | 60-100% |
| Cr | 0-40% |

15. Procedure according to one or more of the claims from 11 to 14, **characterized in that** said second layer comprises tungsten carbide (WC).

16. Procedure according to one or more of the claims from 11 to 15, **characterized in that** said second layer comprises at least one additional component selected from the group comprising cobalt (Co), chrome (Cr), nickel (Ni), carbon (C), copper (Cu) and aluminium (A1).

17. Procedure according to one or more of the claims from 11 to 16, **characterized in that** said second layer comprises tungsten carbide (WC), cobalt (Co), chrome (Cr), nickel (Ni) and carbon (C) in the following weight concentrations evaluated with respect to the total weight of the second layer:
| | |
|---|---|
| WC | 40-100% |
| Co | 0-20% |
| Cr | 0-25% |
| Ni | 0-40% |
| C | 0-6% |

18. Procedure according to one or more of the claims from 11 to 17, **characterized in that** it comprises a preliminary cleaning phase of at least one between said installation surface and said visible surface.

19. Procedure according to one or more of the claims from 11 to 18, **characterized in that** said cleaning phase is made by surface abrasion of the mechanical type.

20. Procedure according to one or more of the claims from 11 to 19, **characterized in that** said cleaning phase is made by sandblasting with a controlled Ra roughness substantially variable between 2.5 and 6.5.
